# FASCICULE DE BREVET EUROPEEN

(11) **EP 2 564 660 B1**
(45) Date de publication et mention de la délivrance du brevet: **13.04.2016**
(21) Numéro de dépôt: 11716251.1
(22) Date de dépôt: 22.04.2011
(51) Int. Cl.: H04W 84/18, H04W 40/24

(54) **PROCÉDÉ DE PROPAGATION D'UN ÉVÉNEMENT SURVENANT SUR UN DISPOSITIF D'UN RÉSEAU DE COMMUNICATION RADIOFRÉQUENCE STRUCTURÉ**
VERFAHREN ZUR WEITERLEITUNG EINES AUF EINER FUNKNETZWERKVORRICHTUNG GESCHEHENDEN EREIGNISSES
METHOD OF FORWARDING UN EVENT HAPPENING ON A RADIO NETWORK DEVICE

(30) Priorité: 30.04.2010 FR 1053349
(43) Date de publication de la demande: 06.03.2013
(73) Titulaire: Sagemcom Energy & Telecom SAS, 92500 Rueil-Malmaison (FR)
(72) Inventeur: PERRET, Jean, F-92500 Rueil Malmaison (FR); LOSSOUARN, Yann, F-92500 Rueil Malmaison (FR)
(74) Mandataire: Maillet, Alain
(86) Numéro de dépôt international: PCT/EP2011/056493
(87) Numéro de publication internationale: WO 2011/134909

(56) Documents cités:
- WO-A1-2009/036778
- US-A1- 2006 092 896
- US-A1- 2009 252 088
- "Switching the operation mode of a zigbee node in an embedded device", IP.COM JOURNAL, IP.COM INC., WEST HENRIETTA, NY, US, 1 février 2007 (2007-02-01), XP013117854, ISSN: 1533-0001

## Description

La présente invention concerne le domaine des dispositifs prévus pour communiquer entre eux via un réseau de communication radiofréquence structuré. Plus particulièrement, elle concerne un procédé de propagation d'un évènement survenant sur un dispositif d'un tel réseau ainsi qu'une trame d'un signal destinée à être reçue par un dispositif de ce réseau pour la propagation de cet événement.

Un réseau de communication radiofréquence est dit structuré ou encore maillé (« mesh network» en anglais) lorsque chaque dispositif de ce réseau peut communiquer avec tous les autres (maillage total) ou uniquement avec certains de ses dispositifs (maillage partiel) et ce via un voire plusieurs routeurs. Pour cela, des dispositifs et routeurs utilisent, entre autres, un même mode d'adressage et de communication.

Le déploiement d'un réseau de communication radiofréquence structuré nécessite qu'un compromis soit trouvé pour permettre une forte connectivité entre les dispositifs du réseau et ce afin d'assurer une qualité de service par multiplication des routes possibles empruntées pour l'échange de signaux entre ces dispositifs, une réactivité élevée de chacun de ces dispositifs et ce afin d'éviter des temps de latence dans le réseau, et une optimisation de la consommation énergétique totale du réseau.

Dans les réseaux de communication radiofréquence structurés actuels, chaque dispositif a un comportement particulier vis-à-vis du réseau. Ainsi, certains dispositifs ont la capacité d'assurer le rôle de terminal (End-Terminal en anglais), c'est-à-dire qu'ils ont des moyens pour trouver un réseau de communication radiofréquence structuré, pour s'associer avec l'un des routeurs de ce réseau et ainsi devenir un « enfant » de ce routeur « père », en particulier dès que le lien qu'il avait avec un précédent routeur est rompu, et pour communiquer avec un autre dispositif via ce routeur « père ». De plus, en assurant leur rôle de terminal, ces dispositifs ont la capacité de limiter leur consommation énergétique en basculant en veille, par exemple, lorsque aucune donnée transitant sur le réseau ne leur est destinée pendant une période de temps prédéterminée. Ils ont également la capacité de demander à un routeur « père » si des données lui ont été destinées pendant qu'il était en veille, données qui lui sont alors envoyées par le routeur « père » (polling en anglais).

A titre d'exemple de tels dispositifs, on peut citer des capteurs de température, de pression, des détecteurs de fumée, ou encore des appareils multimédia ou tout autre appareil domestique tel qu'un réfrigérateur etc. ou un actionneur (moteur...).

Certains dispositifs d'un réseau de communication radiofréquence structuré ont la capacité d'assurer le rôle de routeur, c'est-à-dire qu'ils ont des moyens pour trouver un réseau de communication radiofréquence structuré, pour s'associer avec un voire plusieurs des routeurs de ce réseau, pour communiquer avec un routeur auquel il est associé ou avec un dispositif, soit directement, soit via un routeur, pour découvrir et maintenir les meilleures routes pour propager des trames de signaux qu'il reçoit, par exemple par utilisation de tables de routage (routing table en anglais) et autres tables de découverte (route discovery table en anglais). De plus, en assurant leur rôle de routeur, ces dispositifs ont la capacité de permettre à un dispositif distant de s'associer avec lui, le dispositif étant alors le père de l'association hiérarchique et le dispositif distant étant l'enfant de cette association. Ces dispositifs ont également la capacité de propager des trames de signal que ce soit selon un mode point à point ou diffusé, et de conserver en mémoire cache des données destinées à un dispositif enfant lorsque ce dernier est en veille et de propager ces données jusqu'à ce dispositif enfant, lorsque ce dernier sortira de son mode de veille et qu'il le lui demandera (polling en anglais).

Certains dispositifs qui assurent le rôle de routeur ont également la capacité de réduire leur consommation énergétique en basculant dans un mode veille.

Dans un réseau de communication radiofréquence structuré, un dispositif de ce réseau, appelé coordinateur, joue un rôle central pour structurer le réseau. Le coordinateur permet, notamment, l'attribution d'un identifiant unique à chaque autre dispositif du réseau.

Les capacités d'un dispositif sont habituellement implémentées sous forme d'un programme qui est réparti sur des couches protocolaires du modèle OSI.

Bien qu'il existe des dispositifs qui, dès leur fabrication, sont dédiés pour fonctionner soit en tant que terminal soit en tant que routeur soit en tant que coordinateur, c'est-à-dire des dispositifs qui implémentent un programme qui leur procurent soit les capacités d'un terminal, d'un routeur ou d'un coordinateur, il est connu des dispositifs qui implémentent un programme qui recouvre toutes ces capacités et ce pour diminuer le coût financier et l'espace mémoire nécessaire pour le développement et l'implémentation de ce programme. En effet, il est moins coûteux de développer un programme qui allie les capacités d'un routeur et celles d'un terminal plutôt que de développer et d'implémenter des programmes séparés.

Dans le cas où un dispositif serait muni des capacités d'un terminal et d'un routeur et d'un coordinateur, ce dispositif est configuré lors du déploiement du réseau selon le rôle qu'il doit tenir. Ainsi s'il est utilisé comme routeur, ce dispositif est configuré pour fonctionner en tant que routeur, s'il est utilisé en tant que terminal, il est configuré pour fonctionner en tant que terminal et s'il est utilisé en tant que coordinateur, il est configuré pour fonctionner en tant que coordinateur. Une fois configuré, le dispositif assure le même rôle tout au long de son utilisation dans le réseau.

Certains réseaux de communication radiofréquence structurés mettent en oeuvre des protocoles qui sont prévus pour être implémentés à un coût extrêmement réduit, et qui permettent au dispositif une utilisation réduite de ses réserves énergétiques. Ces types de réseaux appartiennent à une famille communément appelée LR WAN (Low Rate Wireless Area Network en anglais). Les réseaux ZigBee basés sur la technologie IEEE 802.15.4 ou les réseaux 6LoWPAN (IETF RFC 4944) sont des exemples de ces types de réseaux de communication radiofréquence structurés qui sont prévus pour des communications à courte distance. On peut également citer comme autre exemple le réseau plus longue distance utilisé dans le système mondial de détresse et de sécurité en mer (SMDSM ou en anglais GMDSS) qui utilise des moyens de télécommunication pour la recherche et le sauvetage en mer et la prévention des accidents maritimes.

Selon les contraintes de portée et de flexibilité d'une application visée, l'utilisation d'un réseau de communication radiofréquence structuré impose que des routeurs (ou dispositifs configurés pour fonctionner en tant que routeurs) soient déployés géographiquement à proximité des terminaux (ou dispositifs configurés pour fonctionner en tant que terminaux) pour qu'une connexité souhaitée du réseau soit obtenue.

De plus, les routeurs doivent rester la plupart du temps (voire en permanence) alimentés pour assurer la connexité des terminaux avec le réseau et ainsi garantir la propagation rapide d'une trame de signal en provenance d'un terminal (dispositif enfant de ce routeur) ou d'un autre routeur voisin.

L'alimentation en énergie des routeurs est importante et requiert donc une connexion filaire au réseau d'alimentation électrique. D'où un coût financier de l'infrastructure filaire d'alimentation de ces routeurs qui est d'autant plus important que la zone géographique sur laquelle l'application visée est étendue.

Ainsi, bien que les terminaux actuels (dispositifs configurés pour fonctionner en tant que terminaux) basculent dans un mode de veille pour économiser la consommation énergétique globale du réseau, la consommation énergétique des infrastructures des réseaux de communication radiofréquence structurés est relativement importante du fait de la consommation des routeurs (dispositifs configurés pour fonctionner en tant que routeurs) nécessaire pour maintenir la connexité de ce réseau.

Pour réduire cette consommation énergétique; la technologie ZigBee propose une solution pour qu'un routeur bascule en veille lorsque ce dernier en a la capacité (sleeping routers en anglais). Ce routeur, une fois en veille, est réveillé périodiquement par réception d'une trame d'un signal émise sur le réseau. La norme IEEE 802.15.4 prévoit également le réveil d'un routeur par émission périodique d'un signal de balise (beacon en anglais) dans le cas d'une communication de type TDMA. Ce signal de balise synchronise le réveil de l'ensemble des terminaux et routeurs du réseau qui sont alors mis en veille pendant certains intervalles de temps (slots de temps de trame) et qui sont réveillés pendant d'autres intervalles de temps (les autres slots de trame).

De telles solutions permettent de minimiser la consommation énergétique globale d'un réseau de communication radiofréquence structuré mais ces solutions ne sont pas adaptées dans le cas d'une application qui nécessite une forte réactivité des dispositifs. En effet, lorsque les dispositifs doivent être réveillés dès qu'un événement se produit sur le réseau, tel que par exemple lorsque l'un des dispositifs du réseau détecte un incident et que cet incident doit être rapidement propagé dans le réseau, ces solutions induisent des temps de latence pour la propagation de cet évènement. C'est le cas notamment, des applications d'alarme incendie dans lesquelles il est impératif que la détection d'un incendie soit propagée sur le réseau très rapidement c'est-à-dire que le moment entre la détection de l'incendie et la propagation de cet évènement jusqu'à un dispositif central soit minimal pour prévenir les secours. Les solutions proposées par les normes ZigBee et IEEE 802.15.4 introduisent des temps de latence de l'ordre de grandeur de la périodicité de l'émission de la trame de réveil ou des durées des *slots* de trame pendant lesquels les routeurs sont en veille. Ainsi, la détection d'un incendie ne sera propagée dans ce type de réseau uniquement lorsque une trame de réveil sera émise ou uniquement à partir du début des *slots* de trame dédiés au réveil des dispositifs et autres routeurs du réseau.

De plus, lors d'une extension d'un réseau de communication radiofréquence structuré existant, l'ajout d'un nouveau terminal (dispositif configuré pour fonctionner en tant que terminal) se trouvant en dehors de la portée des routeurs (des dispositifs configurés pour fonctionner en tant que routeurs) du réseau, requiert qu'un nouveau routeur soit positionné proche de ce nouveau terminal. Un cas similaire peut se produire aussi lorsque la connexité d'un terminal au réseau est jugée insuffisante et qu'un autre routeur doit être ajouté pour l'augmenter. D'où le coût élevé d'une extension ou amélioration de la connexité d'un réseau de communication radiofréquence structuré existant lorsque l'extension couvre un territoire important ou lorsque sa connexité doit être importante.

Le document US 2006/092896 A1 décrit un reseau de type IEEE 802.15.4 qui comporte trois types de dispositifs: coordinateur, dispositif à fonctions completes (FFD) et dispositifs à fonctions réduites (RFD). A chaque dispositif RFD est assigne un dispositif FFD. Lorsqu'un dispositif RFD ne parvient a entrer en contact avec le dispositif FFD qui lui est assigné, il est dit orphelin. Dans ce cas il peut tenter d'entrer en contact avec d'autres dispositifs RFD pour propager un message d'urgence.

L'un des problèmes résolus par la présente invention est d'optimiser le compromis entre une forte connexité momentanée entre les dispositifs du réseau même étendu sur une zone géographique importante, une forte réactivité de chacun des dispositifs de ce réseau et une faible consommation énergétique globale du réseau. L'invention est définie par l'objet des revendications indépendantes.

De manière générale, la présente invention utilise la génération d'une trame dès qu'un dispositif du réseau détecte un événement et à propager cette trame sur le réseau de dispositif en dispositif. La trame comporte une information de configuration dont la valeur indique à un dispositif qui la reçoit qu'il doit se re-configurer pour fonctionner en tant que routeur. La trame comporte également un identifiant de dispositif dont la valeur définit si le dispositif, émetteur de la trame, est à l'origine de la propagation de la trame dans le réseau et une information, dite information d'événement, qui indique si l'événement survient encore sur le dispositif qui est à l'origine de la propagation de la trame dans le réseau ou si cet événement ne survient plus sur ce dispositif.

La propagation de cette trame permet à un dispositif qui la reçoit de se re-configurer dynamiquement pour fonctionner en tant que routeur. Un tel dispositif sera, par exemple, configuré pour fonctionner en tant que terminal lorsque ce dispositif n'est pas sollicité, Il pourra ainsi basculer en veille et ainsi réduire sa consommation énergétique. Ainsi, la plupart des dispositifs du réseau (voire tous, excepté le coordinateur qui doit rester en permanence alimenté en énergie) peuvent être configurés en tant que terminal et ainsi être mis en veille lorsque aucune trame de signal n'est échangée sur le réseau, optimisant ainsi la consommation énergétique globale du réseau car tous les dispositifs du réseau (excepté le coordinateur) sont en veille et aucun lien entre eux n'est maintenu. La connexité du réseau est alors inexistante. Lorsqu'un événement survient sur l'un de ces dispositifs, la trame est émise sur le réseau, chaque dispositif du réseau qui la reçoit est alors réveillé et re-configuré pour fonctionner en tant que routeur. Les dispositifs du réseau sont ainsi réveillés rapidement car la trame est propagée dans le réseau par chacun des dispositifs qui fonctionnent alors en tant que routeurs. De plus, la connexité du réseau devient alors importante du fait que chaque dispositif fonctionne en tant que routeur et que chaque dispositif peut s'associer à un autre dès que ces deux dispositifs sont à portée l'un de l'autre.

De plus, un dispositif qui vient d'être re-configuré pour fonctionner en tant que routeur peut également réveiller un dispositif du réseau qui est à sa portée et qui n'a pas la capacité de fonctionner en tant que routeur en lui envoyant la trame. Ainsi ce dispositif, une fois associé au dispositif qui l'a réveillé, est alors connecté au réseau et il peut émettre une information vers un destinataire avec lequel il n'était pas connecté avant la re-configuration du dispositif.

Plus précisément, selon un de ses aspects, la présente invention concerne un procédé de propagation d'un évènement selon la revendication 1.

L'un des avantages du procédé est de permettre à un capteur ou détecteur d'émettre une trame ci-dessus vers le réseau dès que ce capteur a pris une mesure de son environnement ou dès qu'il a détecté un incident dans son environnement proche. Ce mode permet donc une réactivité du dispositif qui détecte cet incident et un réveil très rapide de l'ensemble des autres dispositifs qui interviennent dans la propagation de cet incident dans le réseau.

Selon un mode de réalisation, suite à la réception d'une trame d'alerte par un dispositif, l'identifiant de dispositif extrait de la trame d'alerte et le temps auquel cette trame a été reçue sont mémorisés dans une mémoire de ce dispositif si la valeur de cet identifiant définit que le dispositif, émetteur de la trame, est à l'origine de la propagation de la trame dans le réseau.

Selon un mode de réalisation, chaque fois qu'une trame d'alerte est reçue par un dispositif, le temps mémorisé en relation avec un identifiant de dispositif extrait de la trame reçue sont mis à jour.

Selon un mode de réalisation, lorsque la durée depuis un temps mémorisé par un dispositif est supérieure à une valeur prédéterminée, un signal de test est émis par ce dispositif à destination du dispositif identifié par l'identifiant de dispositif mémorisé qui est relatif à ce temps, et si ce dispositif ainsi identifié ne répond pas à ce signal de test, le temps et l'identifiant de dispositif sont supprimés de la mémoire du dispositif émetteur du signal de test.

Ce mode est particulièrement avantageux car il permet de déterminer si le dispositif, à l'origine de la propagation de la trame d'alerte sur le réseau est encore en fonctionnement. Par exemple, dans le cas d'un système de détection d'incendie, ce mode de réalisation peut s'avérer utile car il permet de déterminer si un dispositif a été détruit.

Selon un mode de réalisation, chaque trame d'alerte est émise périodiquement par un dispositif tant que sa mémoire n'est pas vide ou tant que l'événement qui survient sur lui n'est pas terminé.

Ce mode permet d'augmenter la fiabilité de la propagation d'une trame d'alerte dans le réseau par répétition de son émission par un dispositif.

Selon un mode de réalisation, des trames de fin d'alerte sont utilisées, chaque trame de fin d'alerte comportant :
- une information, dite information de configuration, indiquant au dispositif destiné à recevoir la trame d'alerte qu'il doit se re-configurer pour fonctionner en tant que routeur pour propager des trames qu'il reçoit par utilisation d'une table de routage.
- un identifiant de dispositif dont la valeur définit si le dispositif, émetteur de la trame d'alerte, est à l'origine de la propagation de la trame d'alerte dans le réseau, et
- une information, dite information d'événement, indiquant que l'événement survient sur le dispositif qui est à l'origine de la propagation de la trame dans le réseau ou si cet événement ne survient plus sur ce dispositif,
et, lorsque l'événement ne survient plus sur un dispositif à l'origine de la propagation d'une trame d'alerte sur le réseau, ce dispositif émet une trame dite trame de fin d'alerte, dans laquelle la valeur de l'identifiant de dispositif définit que ce dispositif est à l'origine de la propagation de la trame d'alerte dans le réseau et l'information d'événement indique que l'événement ne survient plus sur ce dispositif.

Selon un mode de réalisation, suite à l'émission de la trame de fin d'alerte par un dispositif qui est à l'origine de la propagation d'une trame d'alerte sur le réseau, ce dispositif se re-configure pour fonctionner en tant que terminal s'il ne reçoit pas de trame d'alerte.

Ce mode de réalisation est avantageux car il permet d'indiquer automatiquement à l'ensemble des dispositifs d'arrêter de transmettre la trame d'alerte et de les autoriser à se mettre en veille.

Selon un mode de réalisation, suite à la réception par un dispositif d'une trame de fin d'alerte, ce dispositif supprime de sa mémoire l'identifiant de dispositif de la trame reçue si celui-ci y est mémorisé ainsi que le temps qui lui est relatif.

Selon un mode de réalisation, lorsque aucun identifiant de dispositif n'est présent dans la mémoire d'un dispositif, ce dispositif se re-configure pour fonctionner en tant que terminal.

Ce mode de réalisation permet une re-configuration en tant que terminal d'un dispositif lorsque l'événement qui a provoqué la propagation de la trame d'alerte dans le réseau est terminé.

Selon un mode de réalisation, un événement survient sur un dispositif lorsque ce dispositif détecte une anomalie dans son environnement géographique proche ou suite à une instruction d'un programme.

Selon un mode de réalisation, un dispositif se re-configure en tant que routeur uniquement s'il en a la capacité et s'il n'est pas déjà configuré.

Selon un mode de réalisation, un dispositif se re-configure en tant que routeur que si ses réserves d'énergie le lui permettent.

Selon un autre de ses aspects, la présente invention concerne un dispositif d'un réseau de communication radiofréquence structuré selon la revendication 13.

Selon un autre de ses aspects, la présente invention concerne un réseau de communication radiofréquence structuré selon la revendication 14.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement une trame d'un signal selon la présente invention,
Les Figs. 2 et 3 représentent un diagramme des étapes du procédé de propagation d'un évènement survenant sur un dispositif d'un réseau de communication radiofréquence structuré,
La Fig. 4 représente un mode de réalisation des étapes 2 et 7 du procédé des Figs. 2 et 3 lorsque la trame T est décrite en relation avec la Fig. 1, et
La Fig. 5 représente un exemple d'utilisation de la présente invention dans un réseau de communication sans fil structuré déployé pour la détection d'un incendie sur un site.

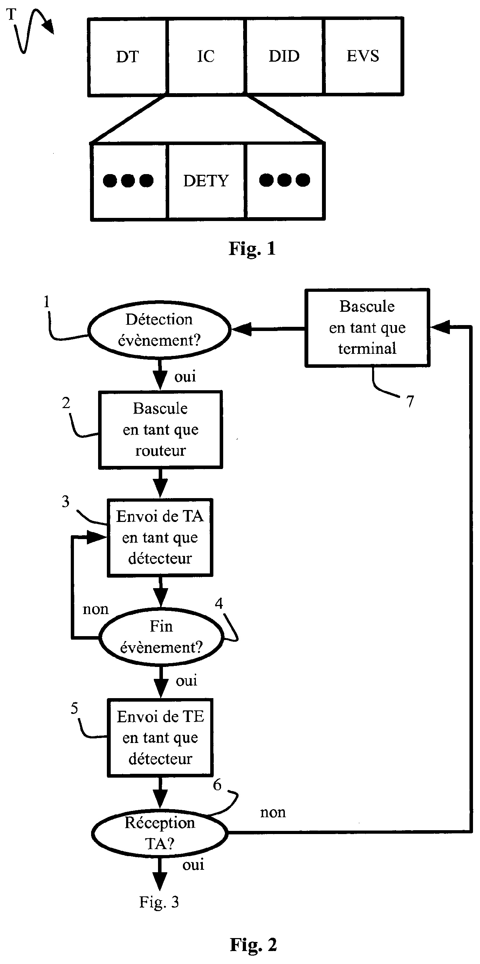

Tel que représenté à la Fig. 1, la trame T comporte un identifiant de trame DT qui indique son type. Un dispositif peut ainsi déterminer que le type de la trame T qu'il a reçue et appliquer des moyens particuliers pour extraire de cette trame les informations qu'elle porte.

La trame T comporte une information IC, dite information de configuration, dont la valeur indique au dispositif qu'il doit se re-configurer pour fonctionner en tant que routeur.

La trame T comporte également un identifiant DID de dispositif dont la valeur définit si le dispositif, émetteur de la trame, est à l'origine de la propagation de la trame dans le réseau.

La trame T comporte aussi une information, dite information d'événement EVS, qui indique si l'événement survient sur le dispositif qui est à l'origine de la propagation de la trame dans le réseau ou si cet événement ne survient plus sur ce dispositif.

Le format de la trame T dépend de la technologie utilisée pour mettre en oeuvre le réseau de communication radiofréquence structuré.

Dans le cas de la norme ZigBee, la trame T peut être formatée, par exemple en allouant 8 bits pour DT, 8 bits pour IC, 8 bits pour DID, et 8 bits pour EVS.

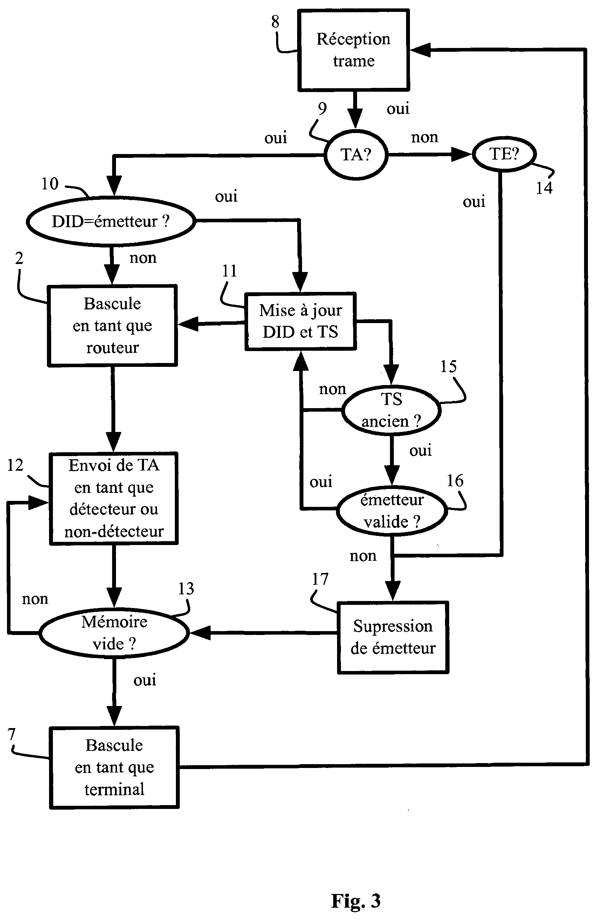

Les Figs. 2 et 3 représentent un diagramme des étapes du procédé de propagation d'un évènement survenant sur un dispositif d'un réseau de communication radiofréquence structuré comportant une pluralité de dispositifs Di.

Suite à la détection d'un événement (étape 1) tel que par exemple la détection d'un incendie, ou suite à un événement programmé tel que par exemple une demande de donnée d'un dispositif à un dispositif du réseau (coordinateur ou autre), un dispositif D1 du réseau se réveille (s'il était en mode veille) et se re-configure pour fonctionner en tant que routeur (étape 2). Le dispositif D1 émet (étape 3) une trame TA, dite trame d'alerte, qui est conforme à la trame T décrite en relation avec la Fig. 1 et dans laquelle la valeur de l'identifiant DID de dispositif définit que le dispositif D1 est à l'origine de la propagation de la trame TA dans le réseau et l'information d'événement EVS indique que l'événement survient sur ce dispositif D1.

Le dispositif D1 détecte en permanence l'événement. Par exemple, dans le cas d'un système d'alarme incendie, le dispositif D1 est un détecteur d'incendie (fumée, température excessive etc.) qui, suite à son déclenchement, actionne ses moyens d'avertissement sonore tant qu'il n'est pas réinitialisé.

Selon un mode de réalisation, le dispositif D1 émet périodiquement la trame TA tant que l'événement survient sur ce dispositif (étape 4), en l'occurrence tant que l'incendie est présent à proximité de ce dispositif.

Selon un mode de réalisation, lorsque l'événement ne survient plus sur le dispositif D1 (étape 4), c'est-à-dire sur le dispositif qui est à l'origine de la propagation d'une trame d'alerte TA dans le réseau, ce dispositif D1 émet (étape 5) une trame, dite trame de fin d'alerte TE, qui est conforme à la trame T décrite en relation avec la Fig. 1, et dans laquelle la valeur de l'identifiant DID de dispositif définit que ce dispositif est à l'origine de la propagation de la trame d'alerte dans le réseau et l'information d'événement EVS indique que l'événement ne survient plus sur ce dispositif D1.

Selon un mode de réalisation, suite à l'émission de la trame de fin d'alerte TE par le dispositif D1, ce dispositif se re-configure pour fonctionner en tant que terminal (étape 7) s'il ne reçoit pas de trame d'alerte (étape 6).

Dans le cas où le dispositif D1 reçoit encore une trame d'alerte TA émise par un autre dispositif, en l'occurrence D2, le dispositif D1 suit le procédé décrit maintenant en relation avec la Fig. 3.

Lorsqu'un dispositif du réseau (D1 ou D2) reçoit une trame T conforme à la trame décrite en relation avec la Fig. 1, ce dispositif détermine s'il s'agit d'une trame d'alerte TA (étape 9).

Si c'est le cas, ce dispositif se re-configure pour fonctionner en tant que routeur (étape 2) et émet (étape 12) une autre trame d'alerte TA dans laquelle la valeur de l'identifiant DID de dispositif définit soit que ce dispositif, en l'occurrence D2, n'est pas à l'origine de la propagation de la trame dans le réseau, soit que ce dispositif, en l'occurrence D1, est à l'origine de la propagation de la trame dans le réseau. L'information d'événement EVS de la trame TA indique que l'événement survient sur le dispositif D1 et ce que la trame TA soit envoyée par le dispositif D1 ou par le dispositif D2.

Selon un mode de réalisation, suite à la réception d'une trame d'alerte TA par un dispositif (D1 ou D2), d'une part, l'identifiant DID de dispositif extrait de la trame d'alerte TA et le temps TS auquel cette trame a été reçue sont mémorisés (étape 11) dans une mémoire M de ce dispositif si la valeur de cet identifiant DID définit que le dispositif, émetteur de la trame, est à l'origine de la propagation de la trame dans le réseau (étape 10). Ainsi, si le dispositif D2 reçoit une trame TA émise par le dispositif D1, le dispositif D2 mémorise l'identifiant de dispositif DID qui identifie D1 comme étant à l'origine de la propagation de la trame dans le réseau. Le dispositif D2 mémorise également le temps auquel il a reçu cette trame TA.

Selon un mode de réalisation, la trame TA est émise périodiquement par un dispositif tant que sa mémoire M n'est pas vide (étape 13).

Selon un mode de réalisation, chaque fois qu'une trame d'alerte TA est reçue par un dispositif, par exemple D2, le temps TS mémorisé en relation avec un identifiant de dispositif DID extrait de la trame TA reçue sont mis à jour (étape 11). Ainsi, selon l'exemple donné, chaque fois que le dispositif D2 reçoit une trame TA dont l'identifiant DID identifie le dispositif D1, le temps TS mémorisé en relation avec cet identifiant DID est remplacé par le temps auquel la dernière trame TA a été reçue par le dispositif D2.

Selon un mode de réalisation, lorsque la durée depuis un temps TS mémorisé par un dispositif, par exemple D2, est supérieure à une valeur prédéterminée (étape 15), un signal de test est émis par ce dispositif (D2) à destination du dispositif, par exemple D1, identifié par l'identifiant de dispositif mémorisé DID qui est relatif à ce temps (TS), et si ce dispositif, en l'occurrence D1, ainsi identifié ne répond pas à ce signal de test (étape 16), le temps TS et l'identifiant de dispositif DID relatif en l'occurrence à D1, sont supprimés de la mémoire du dispositif D2, émetteur du signal de test (étape 17).

Selon un mode de réalisation, suite à la réception (étape 14) par un dispositif d'une trame de fin d'alerte TE, ce dispositif supprime (étape 17) de sa mémoire l'identifiant de dispositif DID de la trame TE reçue si celui-ci y est mémorisé ainsi que le temps TS qui lui est relatif. Ainsi, selon l'exemple, lorsque le dispositif D2 reçoit une trame TE, il supprime de sa mémoire l'identifiant de dispositif DID qui identifie le dispositif D1 ainsi que le temps TS qui est relatif à cet identifiant DID.

Selon un mode de réalisation, lorsque aucun identifiant de dispositif DID n'est présent dans la mémoire d'un dispositif (étape 13), ce dispositif se re-configure pour fonctionner en tant que terminal (étape 7).

Selon un mode de réalisation, un dispositif se re-configure soit en tant que routeur, soit en tant que terminal uniquement s'il en a la capacité et s'il n'est pas déjà configuré.

Selon un mode de réalisation, un dispositif se re-configure en tant que routeur que si ses réserves d'énergie le lui permettent.

La mise en oeuvre de l'un des modes de réalisation du procédé décrit en relation avec les Figs. 2 et 3 dépend de la capacité du dispositif à assurer le rôle de terminal et/ou de routeur.

Dans sa version minimaliste, un dispositif comporte des moyens pour extraire l'information IC, l'identifiant de dispositif DID et l'information d'événement EVS de la trame T, des moyens pour se re-configurer pour fonctionner en tant que routeur soit suite à la détection d'un événement par ce dispositif, soit suite à la réception d'une trame TA, des moyens pour renseigner une trame TA et/ou TE, des moyens pour émettre une trame T, et des moyens pour mettre en oeuvre les étapes 1, 2, 3, 8, 9 et 12 tandis que dans sa version complète, le dispositif comporte également des moyens pour mettre en oeuvre les autres étapes du procédé, en particulier une mémoire M.

Quel que soit le procédé mis en oeuvre par le dispositif, son implémentation respecte le protocole imposé par le réseau utilisé. Par exemple, dans un réseau Zigbee, le protocole de communication indique, entre autres, que l'émission d'un signal par un dispositif est soumise à une autorisation préalable et qu'une réponse est émise par un dispositif qui a reçu une commande. Cette réponse achemine un compte-rendu de l'application de cette commande sur le dispositif qui l'a reçue.

La mise en oeuvre du procédé sur un réseau Zigbee impose donc à un dispositif de comporter de plus des moyens pour identifier qu'une commande reçue est formatée selon la trame T décrite en relation avec la Fig. 1. A cet effet, l'identifiant DT de la trame est utilisé. Ce dispositif comporte également des moyens pour générer une telle commande mais également une réponse qui peut, par exemple, comporter un identifiant de trame et un champ état qui indique le compte-rendu de l'application de cette commande sur le dispositif qui l'a reçue. Le champ état peut indiquer soit que le dispositif s'est re-configuré conformément à la commande (valeur SUCCESS), soit que ce dispositif ne reconnaît pas cette commande ou qu'il n'a pas la capacité de re-configurer son comportement conformément à cette commande (valeur NOT-SUPPORTED), soit qu'une erreur interne est survenue lors de la re-configuration du dispositif (valeur ERROR).

Ainsi, suite à la réception d'une trame T ou une fois que le dispositif s'est re-configuré ou tenté de le faire, le dispositif émet systématiquement une réponse à destination du dispositif émetteur de cette commande qui comporte le compte-rendu de sa re-configuration.

Par ailleurs, un dispositif d'un réseau Zigbee maintient en mémoire des informations concernant la configuration de son comportement vis-à-vis du réseau. Ces informations, appelées capacity information en anglais, comportent, entre autres, une information DDETY qui détermine si le dispositif fonctionne en tant que terminal (valeur égale par exemple à TERMINAL) ou en tant que routeur (valeur par exemple égale à ROUTEUR). Dans ce cas, l'information IC de la trame T comporte une information DETY qui indique que le dispositif qui reçoit la trame doit se re-configurer en tant que routeur (DETY=ROUTEUR).

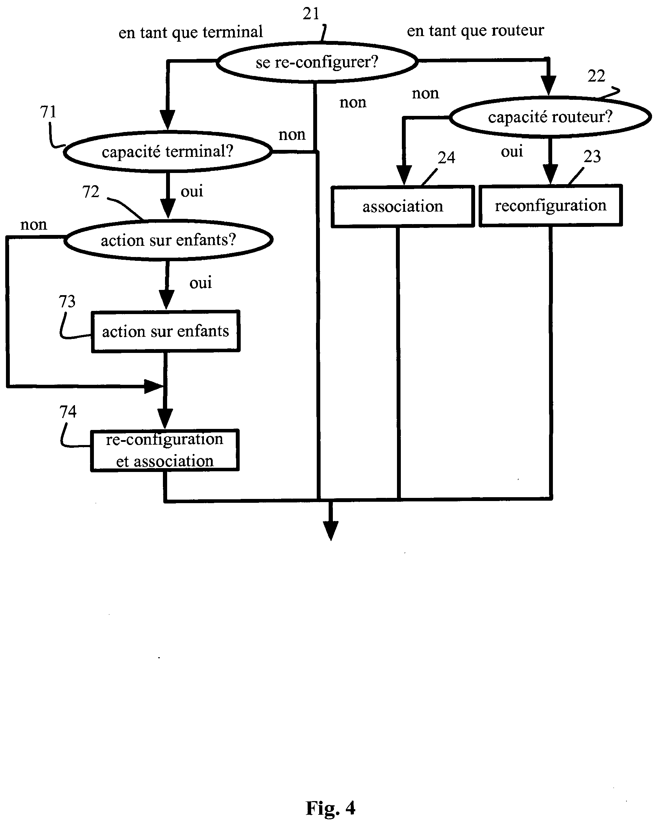

La Fig. 4 représente un mode de réalisation des étapes 2 et 7 du procédé des Figs. 2 et 3 lorsque la trame T est décrite en relation avec la Fig. 1.

L'étape 2 des Fig. 2 et 3 débute par une sous-étape 21 au cours de laquelle il est déterminé si le dispositif doit se re-configurer en tant que routeur par comparaison des informations DDETY et DETY (information portée par l'information IC d'une trame TA reçue). Si DDETY et DETY sont égales à la même valeur, en l'occurrence à la valeur ROUTEUR, le dispositif n'a pas à re-configurer son fonctionnement.

Si le dispositif doit se re-configurer (en tant que routeur), le procédé se poursuit par une sous-étape 22 au cours de laquelle il est vérifié si le dispositif a la capacité de fonctionner en tant que routeur.

Si le dispositif a la capacité de fonctionner en tant que routeur, le dispositif se re-configure en tant que routeur et modifie son information locale DDETY qui vaut maintenant ROUTEUR (sous-étape 23).

Si le dispositif n'a pas la capacité de fonctionner en tant que routeur, le dispositif s'associe avec un routeur du réseau (ou un dispositif distant fonctionnant en tant que routeur) (sous-étape 24). Le dispositif devient alors un dispositif enfant par rapport à ce routeur. Dans le cas où le dispositif était déjà présent sur le réseau avant sa re-configuration, il peut éventuellement conserver son adresse réseau. Par exemple, dans un réseau Zigbee, un dispositif est considéré comme étant présent sur le réseau si une adresse courte et une adresse longue (identifiant PANID unique du dispositif dans le réseau) ont été affectées à ce dispositif, si son information réseau (Network Information Base en anglais), sa table de voisins (Neighbor table) contient l'adresse du routeur père avec lequel il est associé et ce dispositif père contient l'adresse de ce dispositif (enfant) dans sa table de voisins, si le dispositif contient toutes les clefs de sécurité courantes du réseau qui sont, entre autres, utilisées dans le réseau pour obtenir la permission d'émettre un signal.

Si le dispositif doit se re-configurer en tant que terminal (étape 7 des Figs. 2 et 3), le dispositif vérifie s'il a la capacité de fonctionner en tant que terminal (sous-étape 71). Si c'est le cas, le dispositif vérifie s'il a reçu une indication lui demandant de relayer la trame T vers ses enfants et/ou de rompre les associations avec ses dispositifs enfants avant de se re-configurer (sous-étape 72). Cette indication est par exemple portée par une trame T reçue. Si c'est le cas, le dispositif exécute cette action vis-à-vis de ses dispositifs enfants en nettoyant, entre autres, ses tables de routage et de découverte de routes (sous-étape 73). Le dispositif se re-configure alors en tant que terminal et modifie son information locale DDETY qui vaut maintenant TERMINAL. Le dispositif, fonctionnant alors en tant que terminal, s'associe à un routeur du réseau et, s'il était déjà présent sur le réseau avant sa re-configuration, conserve son adresse réseau (sous-étape 74).

L'intérêt d'un dispositif de se re-configurer en tant que terminal alors qu'il fonctionnait jusque-là en tant que routeur est de libérer des ressources de ce dispositif lorsqu'il en a besoin par exemple pour une prise de mesure ou de limiter le rôle de ce dispositif lorsque ses réserves énergétiques sont insuffisantes ou à des fins de maintenance de ce dispositif.

Lorsque le dispositif se re-configure, il peut être nécessaire que ce dispositif doive redémarrer. Dans ce cas, le dispositif met en oeuvre une procédure particulière définie par le protocole de communication utilisé sur le réseau.

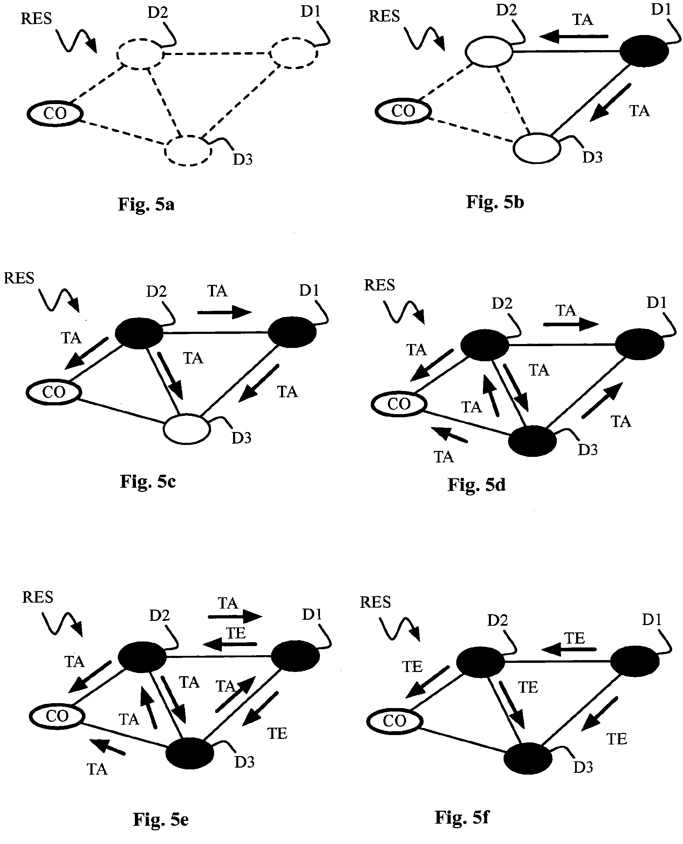

La Fig. 5 représente un exemple d'utilisation de la présente invention dans un réseau de communication sans fil structuré déployé pour la détection d'un incendie sur un site. Selon cet exemple, qui ne limite en rien la présente invention mais qui n'est donné ici qu'à titre d'exemple pour illustrer l'utilisation du procédé, le réseau de communication sans fil structuré RES comporte un coordinateur CO et trois dispositifs D1, D2 et D3 tels que décrits précédemment, qui ont la capacité d'être configurés pour fonctionner soit en tant que terminal, soit en tant que routeur et qui mettent en oeuvre le procédé décrit en relation avec les Fig. 2 et 3. L'homme du métier est en mesure de réaliser de tels dispositifs à partir de l'état de la technique. Il pourra se référer, par exemple aux normes Zigbee et IEEE 802.15.4 qui décrivent un protocole de communication pour les couches réseau, MAC et physiques de ces dispositifs et coordinateur.

Sur les Figs., les dispositifs sont représentés par des ovales. Un dispositif est représenté par un ovale de couleur blanche lorsque ce dispositif est configuré pour fonctionner en tant que terminal, par un ovale de couleur noire lorsque ce dispositif est configuré pour fonctionner en tant que routeur et par un ovale en pointillé lorsque ce dispositif est en veille que ce dispositif soit configuré pour fonctionner en tant que routeur ou en tant que terminal. De plus, un trait plein reliant deux ovales représente un lien actif entre deux éléments du réseau, c'est-à-dire que ces deux éléments sont associés l'un à l'autre. Un trait pointillé entre deux ovales représente un lien possible mais inactif entre deux éléments, c'est-à-dire que ces éléments sont à portée l'un de l'autre.

Selon l'exemple de la Fig. 5a, admettons que les dispositifs D1, D2 et D3 sont initialement configurés pour fonctionner en tant que terminal (DDETY=TERMINAL), et que chacun de ces dispositifs est en veille.

Admettons maintenant que le dispositif D1 détecte un incendie (étape 1). Ce dispositif D1 se re-configure pour fonctionner en tant que routeur (étape 2). Le dispositif D1 génère une trame d'alerte TA dont l'identifiant de dispositif DID identifie le dispositif D1 comme étant le dispositif à l'origine de la propagation de la trame TA dans le réseau (DID=D1) et l'information d'événement EVS égale TRUE (par exemple) indiquant ainsi que l'évènement survient sur D1. Le dispositif D1 émet la trame TA, de préférence en mode diffusé, réveillant ainsi les dispositifs D2 et D3 (Fig. 5b).

Suite à la réception de la trame d'alerte TA (étapes 8 et 9), le dispositif D2 mémorise dans sa mémoire l'identifiant DID et le temps auquel il a reçu cette trame TA (étapes 10 et 11). Le dispositif D2 se re-configure pour fonctionner en tant que routeur (étape 2), génère une trame TA dont l'identifiant DID égale D2 (qui n'est pas un dispositif à l'origine de la propagation de la trame dans le réseau) et l'information EVS égale TRUE. Le dispositif D2 émet cette trame TA, de préférence en mode diffusé (Fig. 5c).

Suite à la réception de la trame TA émise par le dispositif D1 (étapes 8 et 9), le dispositif D3 mémorise dans sa mémoire l'identifiant DID et le temps auquel il a reçu cette trame TA (étapes 10 et 11). Si la trame TA est issue de D2, le dispositif D3 ne mémorise pas cet identifiant DID et le temps auquel il a reçu cette trame TA (étape 10). Le dispositif D3 se re-configure pour fonctionner en tant que routeur (étape 2), génère une trame TA dont l'identifiant DID égale D3 (D3 n'est pas un dispositif à l'origine de la propagation de la trame dans le réseau) et l'information EVS égale TRUE indiquant ainsi que l'événement survient encore sur le dispositif D1, et émet la trame TA, de préférence en mode diffusé (Fig. 5d).

La connexité du réseau est alors maximale et chaque dispositif D1, D2 et D3 émet périodiquement une trame TA. Ainsi, le coordinateur CO, qui peut par exemple assurer le rôle de centrale de secours, reçoit des trames TA à la fois du dispositif D2 mais également du dispositif D3 augmentant ainsi la fiabilité de la transmission de la trame d'alerte par multiplication des chemins de transfert de cette trame entre dispositifs.

On peut noter que si un dispositif comporte des moyens d'alarme sonore, ce dispositif enclenche ces moyens dès la réception d'une trame d'alerte.

Bien évidemment, si l'un des dispositifs, par exemple D2, détecte à son tour l'incendie, il émet une trame d'alerte TA dont l'identifiant de dispositif DID indique que le dispositif D2 est à l'origine de la propagation de la trame TA dans le réseau et l'information d'événement EVS égale TRUE (par exemple) indiquant ainsi que l'évènement survient sur ce dispositif D2. Ainsi, dans ce cas, le dispositif D1 mémorise un couple (D2,temps), le dispositif D2 mémorise un couple (D1, temps) et le dispositif D3 mémorise deux couples : (D1,temps) et (D2,temps).

Admettons que ce soit le cas et que le dispositif D1 ne détecte plus l'incendie (étape 4). Le dispositif D1 génère alors une trame de fin d'alerte TE dont l'identifiant de dispositif DID identifie le dispositif D1 comme étant le dispositif à l'origine de la propagation de la trame TA dans le réseau (DID=D1) et l'information d'événement EVS égale FALSE (par exemple) indiquant ainsi que l'évènement est terminé (n'est plus détecté par D1). Le dispositif D1 émet alors la trame de fin d'alerte TE (étape 5), de préférence en mode diffusé (Fig. 5e).

Lorsque le dispositif D2 reçoit la trame TE émise par le dispositif D1, il supprime de sa mémoire le couple (D1, temps) (étapes 14, 17) mais lorsqu'il reçoit une trame TA du dispositif D3, il mémorise le couple (D1, temps) car le dispositif D3 n'a pas encore reçu la trame TE émise par le dispositif D1. Le dispositif D1 émet une trame TA chaque fois qu'il reçoit une trame du dispositif D2 ou D3 et mémorise le couple (D2, temps). Mais, comme le dispositif D1 ne détecte plus l'incendie, il émet aussi une trame TE.

Ainsi des trames TA et TE transitent sur le réseau. Lorsque le dispositif D2 ne détecte plus l'incendie (étape 4), le dispositif D2 émet une trame TE et chaque dispositif supprime les couples qu'il mémorise. Seules des trames TE se propagent alors sur le réseau (Fig. 5f). Chaque dispositif se re-configure en tant que terminal une fois que leur mémoire est vide (étapes 13 et 7) et chaque terminal bascule en veille. La connexité du réseau est alors inexistante et le réseau reprend sa configuration d'origine (Fig. a).

A travers cet exemple, on comprend comment la connexité d'un réseau de communication radiofréquence structuré est dynamiquement établie dès qu'un dispositif émet une trame TA et comment cette connexité est rompue par propagation de la trame TE.

On comprend également que le procédé peut également être utilisé pour étendre un réseau existant. En effet, considérons un réseau comportant un coordinateur, des routeurs (et/ou dispositifs susceptibles d'être configurés pour fonctionner en tant que routeurs) et des terminaux (et/ou des dispositifs susceptibles d'être configurés pour fonctionner en tant que terminaux). Lorsqu'un terminal éloigné géographiquement d'un routeur doit être en mesure de communiquer avec un dispositif ou avec le coordinateur de ce réseau existant, il suffit d'implémenter le procédé sur ce terminal, alors pourvu de moyens pour acquérir la capacité d'un routeur, pour pouvoir déployer un sous-réseau dont le point d'accès sera ce terminal évolué.

On peut également utiliser ce procédé sur des réseaux dont les dispositifs ne sont actifs que très rarement par exemple lorsqu'un de ses dispositifs doit récolter des mesures des autres dispositifs que périodiquement.

## Revendications

1. Procédé de propagation d'un évènement survenant sur un dispositif d'un réseau de communication radiofréquence structuré comportant une pluralité de dispositifs, **caractérisé en ce que** des trames (T) sont utilisées, chaque trame (T) comporte :
- une information, dite information de configuration (IC), permettant d'indiquer à un dispositif recevant la trame (T) qu'il doit se re-configurer pour fonctionner en tant que routeur pour propager des trames qu'il reçoit par utilisation d'une table de routage,
- un identifiant de dispositif (DID) dont la valeur définit si le dispositif, émetteur de la trame d'alerte, est à l'origine de la propagation de la trame d'alerte dans le réseau, et
- une information, dite information d'événement (EVS), indiquant que l'événement survient sur le dispositif qui est à l'origine de la propagation de la trame dans le réseau ou si cet évènement ne survient plus sur ce dispositif,
Le procédé étant exécuté par au moins un dispositif (1). lequel :
- se re-configure (2) pour fonctionner en tant que routeur suite à la détection de l'événement par ce dispositif (1),
- émet (3), une fois re-configuré en routeur, une trame (T), dite trame d'alerte (TA), dans laquelle la valeur de l'identifiant (DID) de dispositif définit que ce dispositif est à l'origine de la propagation de la trame d'alerte (TA) dans le réseau et l'information d'événement (EVS) indique que l'événement survient sur -ce dispositif, et,
- lorsqu'un autre dispositif reçoit une trame d'alerte (TA) (8,9), cet autre dispositif se re-configure pour fonctionner en tant que routeur (2) et émet (12), une fois re-configuré en routeur, une autre trame d'alerte (TA) dans laquelle la valeur de l'identifiant (DID) de dispositif définit que cet autre dispositif n'est pas à l'origine de la propagation de la trame (TA) dans le réseau et l'information d'événement (EVS) indique que l'événement survient sur le dispositif qui est à l'origine de la propagation de la trame (TA) dans le réseau,
et **en ce que**, une fois re-configuré en routeur, chaque dispositif est destiné à propager des trames de signaux qu'il reçoit, par l'utilisation d'une table de routage.

2. Procédé selon la revendication 1, dans lequel suite à la réception d'une trame d'alerte (TA) par un dispositif, l'identifiant (DID) de dispositif extrait de la trame d'alerte (TA) et le temps (TS) auquel cette trame a été reçue sont mémorisés (11) dans une mémoire (M) de ce dispositif si la valeur de cet identifiant (DID) définit que le dispositif, émetteur de la trame, est à l'origine de la propagation de la trame dans le réseau (10).

3. Procédé selon la revendication 2, dans lequel chaque fois qu'une trame d'alerte (TA) est reçue par un dispositif, le temps (TS) mémorisé en relation avec un identifiant de dispositif (DID) extrait de la trame reçue sont mis à jour (11).

4. Procédé selon la revendication 3, dans lequel lorsque la durée depuis un temps (TS) mémorisé par un dispositif est supérieure à une valeur prédéterminée (15), un signal de test est émis par ce dispositif à destination du dispositif identifié par l'identifiant de dispositif mémorisé (DID) qui est relatif à ce temps (TS), et si ce dispositif ainsi identifié ne répond pas à ce signal de test (16), le temps (TS) et l'identifiant de dispositif (DID) sont supprimés de la mémoire du dispositif émetteur du signal de test (17).

5. Procédé selon l'une des revendications 2 à 4, dans lequel chaque trame d'alerte (TA) est émise périodiquement par un dispositif tant que sa mémoire n'est pas vide ou tant que l'événement qui survient sur lui n'est pas terminé (3, 4, 12, 13).

6. Procédé selon l'une des revendications 1 à 3,
dans lequel, lorsque l'événement ne survient plus sur un dispositif (4) à l'origine de la propagation d'une trame d'alerte (TA) sur le réseau, ce dispositif émet (5) une trame (T), dite trame de fin d'alerte (TE), dans laquelle la valeur de l'identifiant (DID) de dispositif définit que ce dispositif est à l'origine de la propagation de la trame d'alerte (TA) dans le réseau' et l'information d'événement (EVS) indique que l'événement ne survient plus sur ce dispositif.

7. Procédé selon la revendication 6, dans lequel, suite à l'émission de la trame de fin d'alerte (TE) par un dispositif qui est à l'origine de la propagation d'une trame d'alerte (TA) sur le réseau, ce dispositif se re-configure pour fonctionner en tant que terminal s'il ne reçoit pas de trame d'alerte (6,7).

8. Procédé selon l'une des revendications 6 à 7, dans lequel suite à la réception (14) par un dispositif d'une trame de fin d'alerte (TE), ce dispositif supprime (17) de sa mémoire l'identifiant (DID) de dispositif de la trame reçue si celui-ci y est mémorisé ainsi que le temps (TS) qui lui est relatif.

9. Procédé selon l'une des revendications 2 à 8, dans lequel lorsque aucun identifiant de dispositif n'est présent dans la mémoire d'un dispositif (13), ce dispositif se re-configure pour fonctionner en tant que terminal (7).

10. Procédé selon l'une des revendications 1 à 9, dans lequel un événement survient sur un dispositif lorsque ce dispositif détecte une anomalie dans son environnement géographique proche ou suite à une instruction d'un programme.

11. Procédé selon l'une des revendications 1 à 10, dans lequel un dispositif se re-configure en tant que routeur uniquement s'il en a la capacité et s'il n'est pas déjà configuré.

12. Procédé selon l'une des revendications 1 à 11, dans lequel un dispositif se re-configure en tant que routeur que si ses réserves d'énergie le lui permettent.

13. Dispositif destiné à être utilisé dans un réseau de communication radiofréquence structuré qui comporte une pluralité de dispositifs, **caractérisé en ce que** des trames (T) sont utilisées et chaque trame (T) comportant :
- une information, dite information de configuration (IC), permettant d'indiquer au dispositif recevant la trame (T) qu'il doit se re-configurer pour fonctionner en tant que routeur pour propager des trames qu'il reçoit par utilisation d'une table de routage,
- un identifiant de dispositif (DID) dont la valeur définit si le dispositif, émetteur de la trame d'alerte, est à l'origine de la propagation de la trame d'alerte dans le réseau, et
- une information, dite information d'événement (EVS), indiquant que l'événement survient sur le dispositif qui est à l'origine de la propagation de la trame dans le réseau ou si cet évènement ne survient plus sur ce dispositif ;
**en ce que** ledit dispositif comporte :
- des moyens pour se re-configurer (2) pour fonctionner en tant que routeur suite à la détection d'un évènement survenant sur ce dispositif (1),
- des moyens pour émettre (3), une fois re-configuré en routeur, une trame (T), dite trame d'alerte (TA), dans laquelle la valeur de l'identifiant (DID) de dispositif définit que ce dispositif est à l'origine de la propagation de la trame d'alerte (TA) dans le réseau et l'information d'événement (EVS) indique que l'événement survient sur ce dispositif, et
- et, sur réception d'une autre trame d'alerte (TA) (8, 9) en provenance d'un autre dispositif du réseau de communication radiofréquence structuré, des moyens pour se re-configurer pour fonctionner en tant que routeur (2) et pour émettre (12), une fois re-configuré en routeur une autre trame d'alerte (TA) dans laquelle la valeur de l'identifiant (DID) de dispositif définit que le dispositif n'est pas à l'origine de la propagation de la trame dans le réseau et l'information d'événement (EVS) indique que l'événement survient sur le dispositif qui est à l'origine de la propagation de la trame dans le réseau,
et **en ce que**, une fois re-configuré en routeur, le dispositif est destiné à propager des trames de signaux qu'il reçoit, par utilisation d'une table de routage.

14. Réseau de communication radiofréquence structuré comportant un ensemble de dispositifs, **caractérisé en ce qu'**au moins un de ces dispositifs est conforme à la revendication 13.

## Patentansprüche

1. Verfahren zur Verbreitung eines Ereignisses, das auf einer Vorrichtung eines strukturierten Funkkommunikationsnetzwerks geschieht, umfassend mehrere Vorrichtungen, **dadurch gekennzeichnet, dass** Frames (T) verwendet werden, wobei jeder Frame (T) Folgendes aufweist:
- eine Information, die Konfigurationsinformation (IC), die es gestattet, einer Vorrichtung, die den Frame (T) empfängt, anzugeben, dass sie sich rekonfigurieren muss, um als Router zu funktionieren, um Frames zu propagieren, die sie durch die Verwendung von einer Routingtabelle empfängt,
- eine Vorrichtungskennung (DID), deren Wert definiert, ob die Vorrichtung, die den Alarm-Frame sendet, die Verbreitung des Alarm-Frames in dem Netzwerk verursacht, und
- eine Information, die Ereignisinformation (EVS), die angibt, dass das Ereignis auf der Vorrichtung geschieht, die die Verbreitung des Frames in dem Netzwerk verursacht, oder ob dieses Ereignis nicht mehr auf dieser Vorrichtung geschieht,
wobei das Verfahren von mindestens einer Vorrichtung (1) durchgeführt wird, die:
- sich rekonfiguriert (2), um nach der Detektion des Ereignisses durch diese Vorrichtung (1) als Router zu funktionieren,
- nachdem sie als Router rekonfiguriert wurde, einen Frame (T), den Alarm-Frame (TA), sendet (3), in dem der Wert der Vorrichtungskennung (DID) definiert, dass diese Vorrichtung die Verbreitung des Alarm-Frames (TA) in dem Netzwerk verursacht, und die Ereignisinformation (EVS) angibt, dass das Ereignis auf dieser Vorrichtung geschieht, und
- wenn eine andere Vorrichtung einen Alarm-Frame (TA)(8,9) empfängt, sich diese andere Vorrichtung rekonfiguriert, um als Router (2) zu funktionieren, und, nachdem sie als Router rekonfiguriert wurde, einen anderen Alarm-Frame (TA) sendet (12), in dem der Wert der Vorrichtungskennung (DID) definiert, dass diese andere Vorrichtung nicht die Verbreitung des Frames (TA) in dem Netzwerk verursacht, und die Ereignisinformation (EVS) angibt, dass das Ereignis auf der Vorrichtung geschieht, die die Verbreitung des Frames (TA) in dem Netzwerk verursacht,
und dass jede Vorrichtung, nachdem sie als Router rekonfiguriert wurde, dazu bestimmt ist, Signalframes zu propagieren, die sie durch die Verwendung von einer Routingtabelle empfängt.

2. Verfahren nach Anspruch 1, wobei, nach dem Empfangen eines Alarm-Frames (TA) durch eine Vorrichtung, die Vorrichtungskennung (DID), die von dem Alarm-Frame (TA) extrahiert wird, und die Zeit (TS), in der dieser Frame empfangen worden ist, in einem Speicher (M) dieser Vorrichtung gespeichert werden (11), wenn der Wert dieser Kennung (DID) definiert, dass die Vorrichtung, die den Frame sendet, die Verbreitung des Frames in dem Netzwerk (10) verursacht.

3. Verfahren nach Anspruch 2, wobei, jedes Mal, wenn ein Alarm-Frame (TA) durch eine Vorrichtung empfangen wird, die Zeit (TS), die in Verbindung mit einer Vorrichtungskennung (DID) gespeichert wird, die von dem empfangenen Frame extrahiert wird, aktualisiert wird (11).

4. Verfahren nach Anspruch 3, wobei, wenn die Dauer seit einer Zeit (TS), die von einer Vorrichtung gespeichert wird, größer als ein vorbestimmter Wert (15) ist, ein Testsignal von dieser Vorrichtung zu der Vorrichtung gesendet wird, die von der gespeicherten Vorrichtungskennung (DID) identifiziert wird, die sich auf diese Zeit (TS) bezieht, und wenn diese auf diese Weise identifizierte Vorrichtung nicht auf dieses Testsignal (16) antwortet, die Zeit (TS) und die Vorrichtungskennung (DID) aus dem Speicher der Vorrichtung, die das Testsignal sendet, gelöscht werden (17).

5. Verfahren nach einem der Ansprüche 2 bis 4, wobei jeder Alarm-Frame (TA) regelmäßig von einer Vorrichtung gesendet wird, solange ihr Speicher nicht leer ist oder solange das Ereignis, das auf ihr geschieht, nicht beendet ist (3, 4, 12, 13).

6. Verfahren nach einem der Ansprüche 1 bis 3, wobei, wenn das Ereignis nicht mehr auf einer Vorrichtung (4) geschieht, die die Verbreitung eines Alarm-Frames (TA) in dem Netzwerk verursacht, diese Vorrichtung (5) einen Frame (T), den Alarmende-Frame (TE), sendet, in dem der Wert der Vorrichtungskennung (DID) definiert, dass diese Vorrichtung die Verbreitung des Alarm-Frames (TA) in dem Netzwerk verursacht, und die Ereignisinformation (EVS) angibt, dass das Ereignis auf dieser Vorrichtung nicht mehr geschieht.

7. Verfahren nach Anspruch 6, wobei, nach dem Senden des Alarmende-Frames (TE) durch eine Vorrichtung, die die Verbreitung eines Alarm-Frames (TA) in dem Netzwerk verursacht, sich diese Vorrichtung rekonfiguriert, um als Endgerät zu funktionieren, wenn sie keinen Alarm-Frame (6, 7) empfängt.

8. Verfahren nach einem der Ansprüche 6 bis 7, wobei, nach dem Empfangen (14) eines Alarmende-Frames (TE) durch eine Vorrichtung, diese Vorrichtung die Vorrichtungskennung (DID) von dem empfangenen Frame, wenn diese dort gespeichert wird, und die Zeit (TS), die sich auf diese bezieht, aus ihrem Speicher löscht (17).

9. Verfahren nach einem der Ansprüche 2 bis 8, wobei, wenn keine Vorrichtungskennung in dem Speicher einer Vorrichtung (13) vorhanden ist, sich diese Vorrichtung rekonfiguriert, um als Endgerät (7) zu funktionieren.

10. Verfahren nach einem der Ansprüche 1 bis 9, wobei ein Ereignis auf einer Vorrichtung geschieht, wenn diese Vorrichtung eine Anomalie in ihrer näheren geografischen Umgebung detektiert oder nach einem Befehl eines Programms.

11. Verfahren nach einem der Ansprüche 1 bis 10, wobei sich eine Vorrichtung nur dann als Router rekonfiguriert, wenn sie die Fähigkeit dazu hat und wenn sie nicht schon konfiguriert ist.

12. Verfahren nach einem der Ansprüche 1 bis 11, wobei sich eine Vorrichtung als Router nur rekonfiguriert, wenn ihre Energiereserven es erlauben.

13. Vorrichtung, die dazu bestimmt ist, in einem strukturierten Funkkommunikationsnetzwerk verwendet zu werden, das mehrere Vorrichtungen aufweist, **dadurch gekennzeichnet, dass** Frames (T) verwendet werden und jeder Frame (T) Folgendes aufweist:
- eine Information, die Konfigurationsinformation (IC), die es gestattet, der Vorrichtung, die den Frame (T) empfängt, anzugeben, dass sie sich rekonfigurieren muss, um als Router zu funktionieren, um Frames zu propagieren, die sie durch die Verwendung von einer Routingtabelle empfängt,
- eine Vorrichtungskennung (DID), deren Wert definiert, ob die Vorrichtung, die den Alarm-Frame sendet, die Verbreitung des Alarm-Frames in dem Netzwerk verursacht, und
- eine Information, die Ereignisinformation (EVS), die angibt, dass das Ereignis auf der Vorrichtung geschieht, die die Verbreitung des Frames in dem Netzwerk verursacht, oder ob dieses Ereignis nicht mehr auf dieser Vorrichtung geschieht,
dass die Vorrichtung Folgendes aufweist:
- Mittel, um sich zu rekonfigurieren (2), um nach der Detektion des Ereignisses, das auf dieser Vorrichtung (1) geschieht, als Router zu funktionieren,
- Mittel, um nach dem Rekonfigurieren als Router, einen Frame (T), den Alarm-Frame (TA), zu senden (3), in dem der Wert der Vorrichtungskennung (DID) definiert, dass diese Vorrichtung die Verbreitung des Alarm-Frames (TA) in dem Netzwerk verursacht, und die Ereignisinformation (EVS) angibt, dass das Ereignis auf dieser Vorrichtung geschieht, und
- und, beim Empfangen eines anderen Alarm-Frames (TA)(8,9) von einer anderen Vorrichtung des strukturierten Funkkommunikationsnetzwerks, Mittel, um sich zu rekonfigurieren, um als Router (2) zu funktionieren, und um, nachdem sie als Router rekonfiguriert wurde, einen anderen Alarm-Frame (TA) zu senden (12), in dem der Wert der Vorrichtungskennung (DID) definiert, dass die Vorrichtung nicht die Verbreitung des Frames in dem Netzwerk verursacht, und die Ereignisinformation (EVS) angibt, dass das Ereignis auf der Vorrichtung geschieht, die die Verbreitung des Frames in dem Netzwerk verursacht,
und dass die Vorrichtung, nachdem sie als Router rekonfiguriert wurde, dazu bestimmt ist, Signalframes zu propagieren, die sie durch die Verwendung von einer Routingtabelle empfängt.

14. Strukturiertes Funkkommunikationsnetzwerk, das mehrere Vorrichtungen aufweist, **dadurch gekennzeichnet, dass** mindestens eine dieser Vorrichtungen mit dem Anspruch 13 konform ist.

## Claims

1. Method for propagating an event arising on a device of a structured radiofrequency communication network comprising a plurality of devices, **characterized in that** frames (T) are used, each frame (T) comprises:
- an information item, termed a configuration information item (IC), making it possible to indicate to a device receiving the frame (T) that it must reconfigure itself so as to operate in the guise of router so as to propagate frames that it receives through the use of a routing table,
- a device identifier (DID) whose value defines whether the device that sent the alert frame originated the propagation of the alert frame in the network, and
- an information item, termed an event information item (EVS), indicating that the event arises on the device which originated the propagation of the frame in the network or whether this event no longer arises on this device;
the method being executed by at least one device (1), which:
- reconfigures itself (2) so as to operate in the guise of router subsequent to the detection of the event by this device (1),
- sends (3), once reconfigured as a router, a frame (T), termed an alert frame (TA), in which the value of the device identifier (DID) defines that this device originated the propagation of the alert frame (TA) in the network and the event information item (EVS) indicates that the event arises on this device, and
- when another device receives an alert frame (TA) (8,9), this other device reconfigures itself so as to operate in the guise of router (2) and sends (12), once reconfigured as a router, another alert frame (TA) in which the value of the device identifier (DID) defines that this other device did not originate the propagation of the frame (TA) in the network and the event information item (EVS) indicates that the event arises on the device which originated the propagation of the frame (TA) in the network,
and **in that**, once reconfigured as a router, each device is intended to propagate signal frames that it receives, through the use of a routing table.

2. Method according to Claim 1, in which subsequent to the reception of an alert frame (TA) by a device, the device identifier (DID) extracted from the alert frame (TA) and the time (TS) at which this frame has been received are stored (11) in a memory (M) of this device if the value of this identifier (DID) defines that the device that sent the frame originated the propagation of the frame in the network (10).

3. Method according to Claim 2, in which each time an alert frame (TA) is received by a device, the time (TS) stored in conjunction with a device identifier (DID) extracted from the frame received are updated (11).

4. Method according to Claim 3, in which when the duration since a time (TS) stored by a device is greater than a predetermined value (15), a test signal is sent by this device destined for the device identified by the stored device identifier (DID) which relates to this time (TS), and if this device thus identified does not respond to this test signal (16), the time (TS) and the device identifier (DID) are deleted from the memory of the device that sent the test signal (17).

5. Method according to one of Claims 2 to 4, in which each alert frame (TA) is sent periodically by a device as long as its memory is not empty or as long as the event which arises on it has not terminated (3, 4, 12, 13).

6. Method according to one of Claims 1 to 3, in which when the event no longer arises on a device (4) that originated the propagation of an alert frame (TA) on the network, this device sends (5) a frame (T), termed an end-of-alert frame (TE), in which the value of the device identifier (DID) defines that this device originated the propagation of the alert frame (TA) in the network and the event information item (EVS) indicates that the event no longer arises on this device.

7. Method according to Claim 6, in which subsequent to the sending of the end-of-alert frame (TE) by a device which originated the propagation of an alert frame (TA) on the network, this device reconfigures itself so as to operate in the guise of terminal if it does not receive any alert frame (6,7).

8. Method according to one of Claims 6 to 7, in which subsequent to the reception (14) by a device of an end-of-alert frame (TE), this device deletes (17) from its memory the device identifier (DID) of the frame received if the latter identifier is stored therein as well as the time (TS) which relates to it.

9. Method according to one of Claims 2 to 8, in which when no device identifier is present in the memory of a device (13), this device reconfigures itself so as to operate in the guise of terminal (7).

10. Method according to one of Claims 1 to 9, in which an event arises on a device when this device detects an anomaly in its close geographical environment or subsequent to an instruction of a program.

11. Method according to one of Claims 1 to 10, in which a device reconfigures itself in the guise of router only if it has the capacity to do so and if it is not already configured.

12. Method according to one of Claims 1 to 11, in which a device reconfigures itself in the guise of router only if its energy reserves allow it to.

13. Device intended to be used in a structured radiofrequency communication network, which comprises a plurality of devices, **characterized in that** frames (T) are used and each frame (T) comprising:
- an information item, termed a configuration information item (IC), making it possible to indicate to the device receiving the frame (T) that it must reconfigure itself so as to operate in the guise of router so as to propagate frames that it receives through the use of a routing table,
- a device identifier (DID) whose value defines whether the device that sent the alert frame originated the propagation of the alert frame in the network, and
- an information item, termed an event information item (EVS), indicating that the event arises on the device which originated the propagation of the frame in the network or whether this event no longer arises on this device;
**in that** said device comprises:
- means for reconfiguring itself (2) so as to operate in the guise of router subsequent to the detection of an event arising on this device (1),
- means for sending (3), once reconfigured as a router, a frame (T), termed an alert frame (TA), in which the value of the device identifier (DID) defines that this device originated the propagation of the alert frame (TA) in the network and the event information item (EVS) indicates that the event arises on this device, and
- and, on reception of another alert frame (TA) (8,9) coming from another device of the structured radiofrequency communication network, means for reconfiguring itself so as to operate in the guise of router (2) and to send (12), once reconfigured as a router, another alert frame (TA) in which the value of the device identifier (DID) defines that the device did not originate the propagation of the frame in the network and the event information item (EVS) indicates that the event arises on the device which originated the propagation of the frame in the network,
and **in that**, once reconfigured as a router, the device is intended to propagate signal frames that it receives, through the use of a routing table.

14. Structured radiofrequency communication network comprising a set of devices, **characterized in that** at least one of these devices complies with Claim 13.
